# NEW EUROPEAN PATENT SPECIFICATION

(11) **EP 1 232 830 B2**
(45) Date of publication and mention of the opposition decision: **07.03.2012**
(45) Mention of the grant of the patent: 01.12.2004
(21) Application number: 02425072.2
(22) Date of filing: 13.02.2002
(51) Int. Cl.: B23P 15/00, E05D 15/52

(54) **Equipment for the production of drive rods for handle units for window frames**
Gerät zur Herstellung von Treibstangen von Griffeinheiten für Fensterrahmen
Appareil pour la fabrication des tringles d' entraînement pour unités de poignée pour cadres de fenêtre

(30) Priority: 14.02.2001 IT BO010080
(43) Date of publication of application: 21.08.2002
(73) Proprietor: GSG INTERNATIONAL S.p.A., 40054 Budrio (Bologna) (IT)
(72) Inventor: Lambertini, Marco, 40068 San Lazzaro di Savena (Bologna) (IT)
(74) Representative: Lanzoni, Luciano

(56) References cited:
- EP-A- 0 803 624
- EP-A- 1 132 169
- EP-B1- 0 745 470
- WO-A-00/52288
- CN-A- 1 045 545
- CN-A- 1 127 682
- DE-A- 3 016 863
- DE-A- 4 328 205
- DE-A- 19 906 758
- DE-A1- 3 437 092
- DE-A1- 3 545 861
- DE-A1- 3 606 182
- DE-A1- 19 909 400
- DE-A1- 19 923 312
- DE-A1- 19 948 862
- DE-B- 1 149 635
- DE-B- 1 276 496
- ES-A- 2 196 934
- GB-A- 1 392 734
- JP-A- 62 267 022
- US-A- 4 928 428
- US-A- 5 676 327

## Description

The present invention relates to an equipment according to the preamble of claim 1.

Currently in the sector of fittings for metal window frames, in particular but without limiting the scope of application, tilt and turn opening frames, use is made and is necessary, for frame operation, of a plurality of accessories which are applied both to the fixed part and to the mobile part of the frame. A main element consists of the drive unit, which allows the achievement of the mobile frame configurations (turning opening, tilting opening, closed) when a handle on the outer surface of the mobile frame is used.

The drive unit (referred to in the description which follows, without excluding others), consists of a pair of rod segments (a portion of a flat section bar) connected to one another by a joining element or, as it is known to experts in the sector, drive rod, which is positioned between the two segments and is attached to the segments using pin connections, normally present on the drive rod, which can be housed in the holes made at corresponding ends of the segments.

The two segments also have other seats or holes, made close to the end opposite that attached to the drive rod, for connection, during the frame assembly steps, to the active elements which open and close the mobile frame (sliding bolts or closing ends) and to drive elements (for example corner drives) for tilting opening of the mobile frame.

The drive unit structured in this way is obtained using a method which involves the production, using a suitable cutting machine, of the above-mentioned rod segments from a section bar with a suitable cross-section profile which is shaped to match and engage with the channel on the section bar - window frame. The length of said segments depends on the dimensions (height) of the mobile frame in which they will be inserted.

Once cut, the segments are further processed to obtain the above-mentioned additional seats and/or holes for connection to the drive rod and the opening/closing and drive elements.

After this processing the segments are mounted in succession and each is attached to the above-mentioned drive elements until completely assembled on the section bar.

The above-mentioned step of producing rod segments is carried out starting with flat section bars of a preset length (normally from four to six metres) which can be inserted, one at a time, in the cutting machine which cuts a number of segments programmed in the machine and depending on the fitter's frame production requirements.

This kind of procedure is known from document EP1132169 which discloses a method and a machine for the production of control units for windows frame. The method comprises the steps, to be carried out simultaneously or in succession, of feeding a section bar with a cross-section which makes a matching fit with the channel in an operating direction, performing a plurality of machining operations on the section bar, using means, designed to make a series of features in the shape and/or profile of the section bar, to form at least the drive means and part of the control elements, cutting from the section bar of a portion, comprising the above-mentioned features, which forms the single rod whose length is substantially equal to the height of the mobile frame. Document EP 1132169 falls under Article 54(3) EPC.

However, this procedure has disadvantages, in particular caused by the flat section bar to be processed, normally consisting of a bar with preset and standard length, and by the cutting machine which, together, have significant dimensions that the fitter does not always find easy to manage. In addition, the operation to cut the rod segments creates a large amount of waste material for each flat section bar processed, which cannot be reused, with a consequent increase in costs for the fitter.

It is also known from document EP0803624 an espagnolette bolt which comprises a rod mounted to translate in a casing housing the translation control mechanism. The rod slides in a groove between locked and unlocked positions. The groove has a bottom groove and a groove flush with the edge which has a transverse width greater than the bottom groove. The T section rod extends along the groove longitudinal axis. The head and the leg forming the T slide respectively in the groove flush with the edge and in the bottom groove. The head is interrupted in front of the rod free end and is extended to the rod end by an end portion of width equal to the width of the T leg.

The document discloses also a method for producing drive rods for handle units for window frames, comprising the steps of
- feeding in a straight operative direction a continuous section bar that is shaped to match and engage with a sliding channel of a window frame and comes from a feeder housing said continuous section bar in a rolled up configuration
- processing a portion of the continuous section bar in a processing station to form at least a part of the retaining and/or drive elements controlled by a handle unit of the window frame to allow the drive rod to slide in both directions and along the channel.
- cutting a portion of the continuous section bar processed in said processing station to a preset length.

The document discloses also equipment working according to the known method.

The applicant realised that such methods could however be improved, in particular in relation to the production rapidity and preciseness.

The aim of the present invention is, therefore, to overcome the above-mentioned disadvantages by providing an equipment for the production of the elements which form the drive unit being extremely rapid and precise, without creating a large amount of waste material and having reduced dimensions.

Accordingly, the present invention provides an equipment having the features of claim 1.

The technical features of the present invention, in accordance with the above-mentioned aims, are set out in claim 1 herein and the advantages more clearly illustrated in the detailed description which follows, with reference to the accompanying drawings, which illustrate a preferred embodiment of the invention and in which
- Figure 1 is a schematic front view with some parts cut away to better illustrate others, of a window frame fitted with the drive rods;
- Figure 2 is an exploded view of a set of drive rods and a control handle unit;
- Figure 3 is a schematic front view of a drive rod consisting of a single body, which can be made using the equipment according to the present invention;
- Figure 4 is a schematic side view with some parts cut away to better illustrate others, of equipment for producing drive rods according to the present invention.

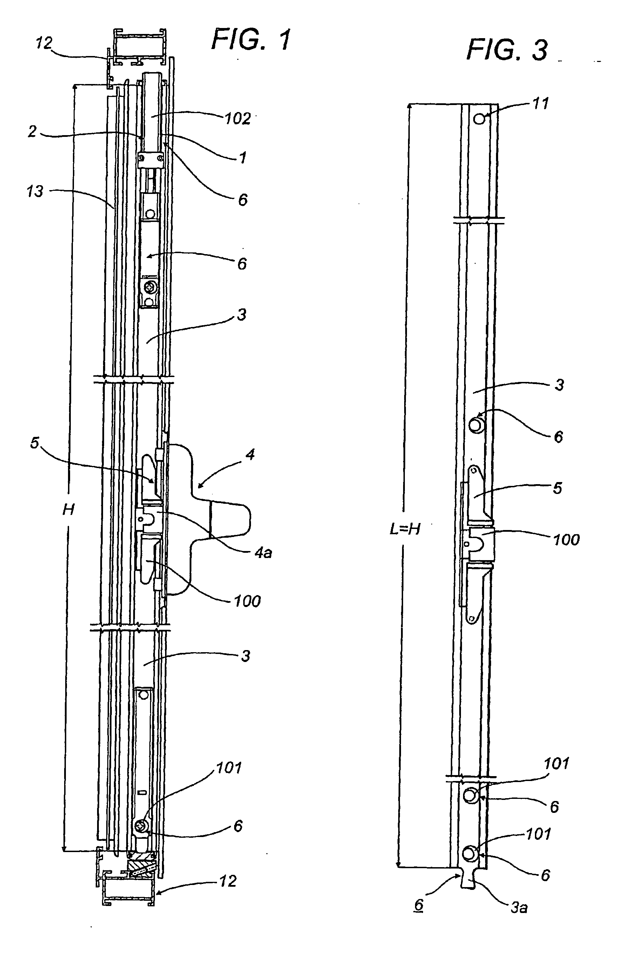

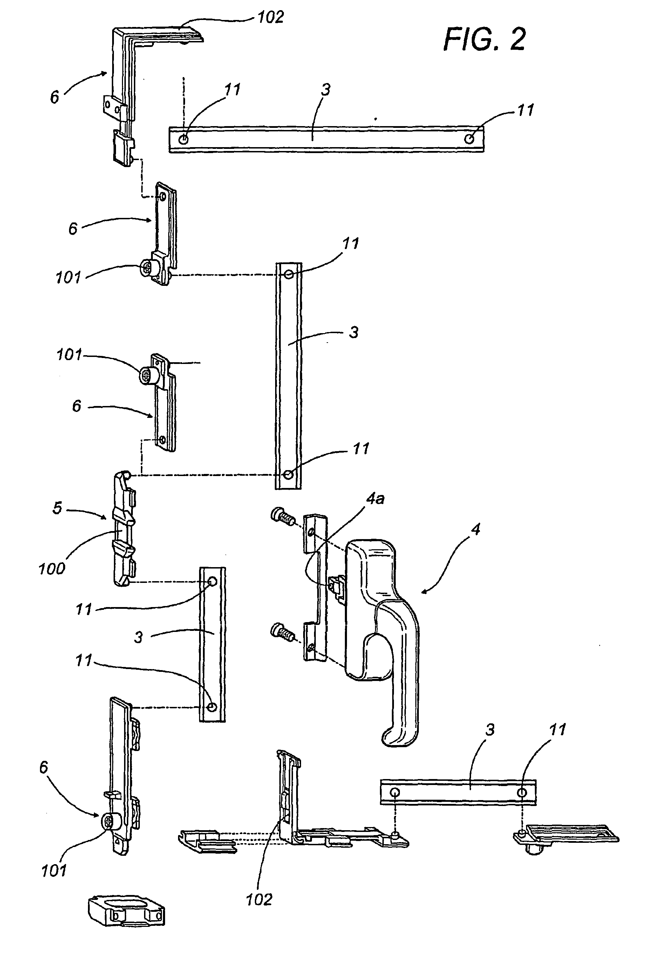

With reference to the accompanying drawings, and in particular with reference to Figures 1 and 2, the equipment is used to produce drive rods for handle units of window frames.

These window frames (see Figure 1) consist of a fixed frame 12 and a mobile frame 13, with height H, which opens in one or more stable configurations (not illustrated here).

The mobile frame 13 comprises a section 1 forming a sliding and/or connecting channel 2 for drive rods 3 for handle units 4.

The handle units 4, through drive means 5, allow the drive rods 3 to slide in both direction and along the channel 2, to obtain one or more stable open configurations and one closed configuration.

The above-mentioned drive rods 3 are also attached to retaining and/or drive elements 6 which can be controlled using the handle unit 4, to achieve the above-mentioned stable open and closed configurations.

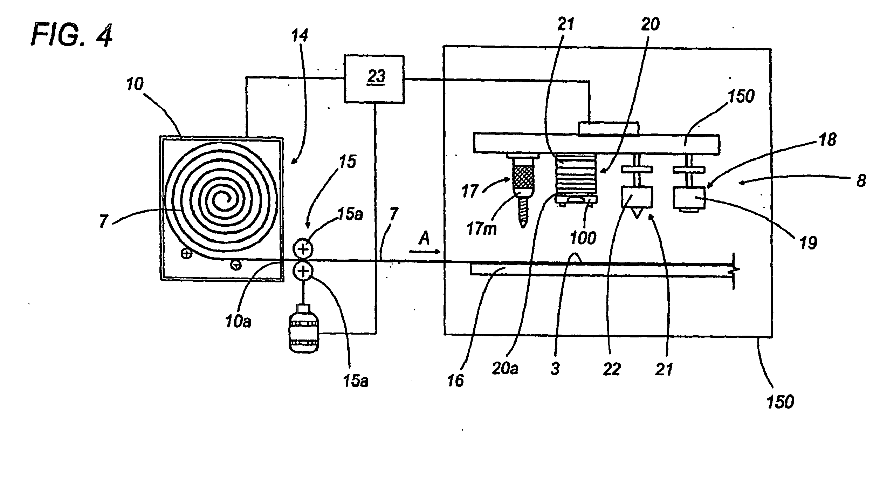

The following steps are required to obtain the drive rods 3 (see also Figure 4) by the equipment:
- feeding a continuous section bar 7, in an operative direction A, the section bar that is shaped to match and engage with the sliding channel 2;
- cutting a portion 3 of the continuous section bar 7 in a processing station 8, to a preset length.

Before the cutting step, there is a step of processing a portion of the continuous section bar 7 in the station 8 to form and attach at least part of the retaining and/or drive elements 6.

The continuous section bar 7 comes from a feeder 10 housing the continuous section bar 7 in a minimum dimensions configuration.

In the embodiment illustrated, the continuous section bar 7 comes from a feeder 10 housing the continuous section bar 7 in a rolled up configuration.

This continuous section bar 7 configuration is possible, since the section bar 7 is made of a plastic - synthetic material with a high modulus of elasticity, that it to say, with the possibility of elastic deformation.

This possibility, therefore, allows the production of a rod 3 from a very strong material with all of the properties suitable for the purpose, and with the possibility of deformation to achieve its minimum dimensions during the production and processing steps.

The above-mentioned processing step may comprise a boring operation on the portion 3 of the continuous section bar 7 to create a plurality of seats 11 for connection of the drive means 5 and the retaining and/or drive elements 6.

Advantageously, the continuous section bar 7 may consist of a single element - rod 3 cut to a length L substantially equal to the above-mentioned height H of the mobile frame 13 (see Figure 3 in particular).

In the embodiment referred to above, with a single rod 3, there is also a step of processing the portion 3 of continuous section bar 7 including an operation of attaching the drive means 5 to the portion 3 of continuous section bar 7.

Attachment of the drive means 5 may be preceded by a boring operation to create the seats 11 for subsequent connection of the drive means 5.

The operations involving boring and the attachment of the drive means 5 to the portion 3 of continuous section bar 7 are preferably always carried out in the processing station 8.

The step of processing the portion 3 of section bar may also include an operation of partially cutting one end 3a of the portion 3 of continuous section bar 7, to obtain an alternative embodiment of the end section, forming one of the above-mentioned retaining and/or drive elements 6.

Up to now reference has been made to generic drive means 5 and retaining and/or drive elements which, in Figures 1 and 2, can comprise a unit 100 for intercepting the control levers 4a of the handle unit 4 (relative to drive means 5), whilst as regards the retaining and/or drive elements 6, these may be customary stop pins 101, end zones shaped in such a way as to allow mobile frame 13 constraint and/or movement in the various configurations, or corner drives 102 for transmission of the motion between the mobile frame 13 uprights and crosspieces. The pins 101 and corner drives 102 may be connected to the rod 3 by means of the seats 11 in the rod 3.

As illustrated in Figure 4, the equipment for producing the rods 3 basically comprises:
- a first station 14 which feeds in the operative direction A a continuous section bar 7 that is shaped to match and engage the sliding channel 2; and
- a second station 8 for cutting the portion 3 of continuous section bar 7 to a preset length.

The second station 8 allows direct processing of the portion 3 of continuous section bar 7 to allow at least the attachment of the drive means 5 and formation and attachment of the retaining and/or drive elements 6.

The station 14 comprises a feeder 10 for the continuous section bar 7, kept in a rolled up configuration. The opening 10a (in this case lower) of the feeder 10 may be equipped with handling means 15 (for example, motor-powered rollers 15a) designed to allow the continuous section bar 7 to be fed in a substantially straight operative direction A.

The continuous section bar 7 is fed to the second, processing station 8, which comprises a guide and programmed feed channel 16 for the continuous section bar 7 below a plurality of sub-stations for processing/cutting the continuous section bar 7.

The second, processing station 8 has a plurality of sub-stations for various processing operations to obtain a complete rod 3 for assembly on the window frame and inserted in a single support body 150.

There may be a sub-station 17 for boring the continuous section bar 7, using a spindle 17m.

There is a sub-station 18, already referred to, for cutting the continuous section bar 7 with cutting means 19.

A sub-station 20 is designed for attaching the drive means 5 to the continuous section bar 7. In this case, the application sub-station 20 has a magazine 21 for feeding the drive means 5 taken from the magazine 21 which consists of a kind of automatic feeder with a mobile application head 20a.

A further processing sub-station 21 may have second cutting means 22, designed to create an alternative embodiment of the end section 3a of the portion 3 of continuous section bar 7, to form the above-mentioned drive element 6 to change the configuration of the mobile frame 13.

The above-mentioned sub-stations 17, 18, 20 and 21 are controlled by a control unit 23 which can be programmed by the operator according to the processing and assembly requirements of the window frames to be produced.

An equipment obtained in this way, therefore, fulfil the preset aims thanks to the processing of a continuous section bar which, during the feed step, can be configured according to its minimum dimensions (that is to say, rolled up) allowing the use of a large quantity of material for rod production in a limited space.

The material still has the same properties as the material conventionally used for the production of these accessories.

Combining this feeder with automated equipment and, in some cases, the possibility of producing rods in a single body for each window frame, increases productivity, leaving the fitter more operating freedom. In addition, it must be remembered that the continuous section bar allows a marked reduction in both the dimensions and in the waste material which the conventional linear bars generated during normal processing.

## Claims

1. Equipment for producing drive rods (3) for handle units (4) of window frames, comprising:
- a first, feed station (14) for feeding in an operative direction (A) a continuous section bar (7) and comprising a feeder (10) for the continuous section bar (7) being housed in a rolled up configuration in the feeder (10) of said feed station (14), said continuous section bar (7) being shaped to match and engage with a sliding channel (2) of a window frame and being made of a plastic synthetic material;
- a second, processing station (8) for the continuous section bar (7), designed to allow at least the cutting of a portion (3) of said continuous section bar (7) to a preset length; the second processing station (8) further comprising sub-stations (17, 18, 20, 21) for processing said portion (3) of said section bar (7) which are designed to allow the providing of the drive rod (3) with the drive means (5) and retaining and/or drive elements (6) controlled by a handle (4) of the window frame, to allow the drive rod (3) to slide in both directions and along the channel (2);
- a programmable control unit (23) controlling the sub-stations (17, 18, 20, 21) according to the processing and assembly requirements of the window frames to be produced;
**characterized in that**
said second, processing station (8) comprises a guide and programmed feed channel (16) for the continuous section bar (7) below said plurality of sub-stations (17, 18, 20, 21) for processing-cutting the continuous section bar (7);
said sub-stations (17, 18,20, 21) of said second, processing station (8) for processing said portion (3) of said section bar (7) are designed to attach said drive means (5) and to at least form and attach retaining and/or drive elements (6) to the drive rod (3) in order to produce complete drive rods (3) having drive means (5) and retaining and/or drive elements (6); and
one of said sub-stations (17, 18, 20, 21) of said second, processing station (8) is a sub-station (20) for attaching the drive means (5) to the continuous section bar (7),
said sub-station (20) having a magazine (21) for feeding the drive means (5).

## Patentansprüche

1. Vorrichtung zur Herstellung von Treibstangen (3) für Griffeinheiten (4) von Fensterrahmen, umfassend:
- eine erste Zuführstation (14) zum Zuführen in einer Betriebsrichtung (A) einer kontinuierlichen Profilstange (7) und umfassend eine Ladevorrichtung (10) für die kontinuierliche Profilstange (7), die in einer aufgerollten Form in der Ladevorrichtung (10) der genannten Zuführstation (14) untergebracht ist, wobei die genannte kontinuierliche Profilstange (7) passgerecht zum Einsetzen in einen Gleitkanal (2) eines Fensterrahmens geformt ist und aus synthetischem Kunststoffmaterial besteht;
- eine zweite Bearbeitungsstation (8) für die kontinuierliche Profilstange (7), dazu bestimmt, wenigstens das Schneiden eines Abschnitts (3) der genannten kontinuierlichen Profilstange (7) zu einer vorgegebenen Länge zu ermöglichen, wobei die zweite Bearbeitungsstation (8) außerdem Unterstationen (17, 18, 20, 21) zum Bearbeiten des genannten Abschnitts (3) der genannten Profilstange (7) umfasst, die dazu dienen, das Versehen der Treibstange (3) mit den Antriebsmitteln (5) und Halte- und/oder Betätigungselementen (6) zu ermöglichen, die durch ein Griff (4) des Fensterrahmens betätigt werden, um die Treibstange (3) entlang des Kanals (2) in beiden Richtungen zu verschieben.
- eine programmierbare Steuereinheit (23), welche die Unterstationen (17, 18, 20, 21) steuert, und zwar je nach den Anforderungen der Bearbeitung und des Zusammenbaus des herzustellenden Fensterrahmens;
**dadurch gekennzeichnet, dass**
die genannte zweite Bearbeitungsstation (8) einen programmierten Führungs- und Zuführkanal (16) für die kontinuierliche Profilstange (7) umfasst, und zwar unterhalb einer Anzahl von Unterstationen (17, 18, 20, 21) zum Bearbeiten - Schneiden der kontinuierlichen Profilstange (7);
die genannten Unterstationen (17, 18, 20, 21) der genannten zweiten Bearbeitungsstation (8) zum Bearbeiten des genannten Abschnitts (3) der genannten Profilstange (7) für das Anbringen der genannten Antriebsmittel (5) ausgelegt sind und so, dass wenigstens Halte- und/oder Betätigungselemente (6) an der Treibstange (3) geformt und angebracht werden, um komplette Treibstangen (3) herzustellen, die Antriebsmittel (5) und Halte- und/oder Betätigungselemente (6) besitzen; und
dass eine der genannten Unterstationen (17, 18, 20, 21) der genannten zweiten Bearbeitungsstation (8) eine Unterstation (20) zum Anbringen der Antriebsmittel (5) an der kontinuierlichen Profilstange (7) ist, wobei die genannte Unterstation (20) ein Magazin (21) zum Zuführen der Antriebsmittel (5) umfasst.

## Revendications

1. Equipement pour la fabrication de tringles d'entraînement (3) pour unités de poignée (4) de cadres de fenêtre, comprenant :
- une première station (14) d'alimentation pour alimenter, dans une direction opérationnelle (A), un profilé continu (7) et comprenant un dispositif d'alimentation (10) du profilé continu (7) étant logé dans une configuration enroulée dans le dispositif d'alimentation (10) de ladite station d'alimentation (14), ledit profilé continu (7) étant conformé pour s'accoupler de façon complémentaire avec un canal de coulissement (2) d'un cadre de fenêtre et étant réalisé dans une matière plastique synthétique ;
- une seconde station (8) d'usinage du profilé continu (7), destinée à permettre au moins la coupe d'une portion (3) du profilé continu (7) à une longueur prédéfinie ; la seconde station (8) d'usinage comprenant également des sous-stations (17, 18, 20, 21) pour l'usinage de la portion (3) du profilé (7), lesquelles sont destinées à permettre la formation de la tringle d'entraînement (3) avec les moyens d'entraînement (5) et des éléments (6) de retenue et/ou d'entraînement commandés par une poignée (4) du cadre de fenêtre afin de permettre le coulissement dans les deux sens de la tringle d'entraînement (3) le long du canal (2) ;
- une unité de contrôle programmable (23) commandant les sous-stations (17, 18, 20, 21) en fonction des exigences d'usinage et d'assemblage des cadres de fenêtre devant être fabriqués ;
**caractérisée en ce que**
ladite seconde station (8) d'usinage comprend un canal (16) de guidage et d'avancement programmé du profilé continu (7) au-dessous de ladite pluralité de sous-stations (17, 18, 20, 21) d'usinage - coupe de ce même profilé continu (7) ;
lesdites sous-stations (17, 18, 20, 21) de ladite seconde station (8) d'usinage pour l'usinage de ladite portion (3) dudit profilé (7) sont conçues pour appliquer lesdits moyens d'entraînement (5) et pour au moins former et appliquer des éléments (6) de retenue et/ou d'entraînement à la tringle d'entraînement (3) afin de fabriquer des tringles d'entraînement complètes (3) ayant des moyens d'entraînement (5) et des éléments (6) de retenue et/ou d'entraînement ; et
l'une desdites sous-stations (17, 18, 20, 21) de ladite seconde station (8) d'usinage est une sous-station (20) pour l'application des moyens d'entraînement (5) au profilé continu (7), ladite sous-station (20) comprenant un magasin (21) pour l'alimentation des moyens d'entraînement (5).
